Europäisches Patentamt

European Patent Office

Office européen des brevets

(11) Publication number : **0 350 987 B1**

(12) **EUROPEAN PATENT SPECIFICATION**

(45) Date of publication of patent specification :
15.04.92 Bulletin 92/16

(51) Int. CI.⁵ : **A23D 9/00**

(21) Application number : **89201705.4**

(22) Date of filing : **27.06.89**

(54) **Edible composition.**

(30) Priority : **27.06.88 GB 8815222**
**26.06.89 EP 89201685**

(43) Date of publication of application :
**17.01.90 Bulletin 90/03**

(45) Publication of the grant of the patent :
**15.04.92 Bulletin 92/16**

(84) Designated Contracting States :
**AT BE CH DE ES FR GB GR IT LI NL SE**

(56) References cited :
**EP-A- 0 236 288**
**EP-A- 0 271 951**
**EP-A- 0 271 963**
**EP-A- 0 291 106**
**EP-A- 0 301 634**
**EP-A- 0 304 131**
**EP-A- 0 319 092**

(73) Proprietor : **UNILEVER NV**
**Burgemeester s'Jacobplein 1 P.O. Box 760**
**NL-3000 DK Rotterdam (NL)**
㊄ **BE CH DE ES FR GR IT LI NL SE AT**

Proprietor : **UNILEVER PLC**
**Unilever House Blackfriars P.O. Box 68**
**London EC4P 4BQ (GB)**
㊄ **GB**

(72) Inventor : **Arends, Berend Jan**
**Van Baerlestraat 226**
**NL-3132 EK Vlaardingen (NL)**
Inventor : **Human, Hendrik Johannes**
**Prinses Marijkelaan 14**
**NL-3155 VG Maasland (NL)**
Inventor : **Struik, Mattheus**
**Merwedehof 19**
**NL-3134 NZ Vlaardingen (NL)**
Inventor : **Wesdorp, Leendert Hendrik**
**Munterstraat 17**
**NL-3123 PN Schiedam (NL)**
Inventor : **Castenmiller, Wilehelmus Adrianus Maria**
**Kuiperstraat 59**
**NL-3131 CH Vlaardingen (NL)**
Inventor : **Liefkens, Theodorus Johannes**
**Asserdreef 9**
**NL-3146 AB Maassluis (NL)**

(74) Representative : **Mulder, Cornelis Willem Reinier, Dr. et al**
**UNILEVER N.V. Patent Division P.O. Box 137**
**NL-3130 AC Vlaardingen (NL)**

## Description

The present invention relates to new edible compositions, more particularly the present invention is concerned with edible compositions containing polyol fatty acid polyesters exhibiting slow crystallization behaviour. It further relates to the use of such fat compositions in cooking, frying, baking etc. and alternatively in the preparation of food products containing a substantial amount of fat.

Polyol fatty acid polyesters, and in particular, the sugar fatty acid polyesters, such as e.g. the sucrose fatty acid polyesters, are known as suitable low-calorie fat-replacers in edible products. Substantially indigestible for human beings they have physical and organoleptic properties very similar to triglyceride oils and fats conventionally used in edible products. Polyol fatty acid polyesters are also reported to have use as pharmaceutical agents e.g. in view of their ability to take up fat-soluble substances, such as in particular cholesterol, in the gastro-intestinal tract, and subsequently remove those substances from the human body.

Edible fat-containing products comprising indigestible polyol fatty acid polyesters are known in the art, and described in e.g. US 3,600,186, US 4,005,195, US 4,005,196, US 4,034,083 and EP 0 233 856, EP 0 236 288, and EP 0 235 836.

In the above art it is disclosed that in food products the use of polyol fatty acid polyesters which are liquid at body temperature, may give rise to the so- called problem of anal leakage. In this art it is suggested to solve this problem by increasing the amount of solids in the fat phase either by adding sufficiently solid matter to the fat phase or to select polyol fatty acid polyesters having a high fraction of solids particularly at 37°C.

However, the use of polyol fatty acid polyesters having a relatively high solid content, for instance, in frying operations has the disadvantage that the high melting polyol fatty acid polyesters rapidly solidify onto the utensils and dish on which the fried product is served. Furthermore the polyesters swiftly crystallize onto the product surface after the frying operation. Thus food products fried in a composition containing such rapidly crystallizing polyol fatty acid polyesters, already shortly after removal from the hot fat, will develop a wax-like layer of solidified polyol fatty acid polyester on the outside of such products. Evidently the development of such a solid fat layer is undesirable as regards to the appearance of the food product as well as regards to the palate of such product.

It has now surprisingly been found that the solidification of high melting polyol fatty acid polyesters at relatively high temperatures can be overcome by selecting a particular polyol fatty acid polyester or blend of polyol fatty acid polyesters that can substantially be supercooled before crystallization is initiated. Furthermore we have found that polyol fatty acid polyesters which can substantially be supercooled, can advantageously be employed in the preparation of food products containing substantial amounts of fat, e.g. spreads.

Accordingly, in a first aspect the present invention is concerned with an edible composition containing a blend of one or more non-digestible polyol fatty acid polyesters having a slip melting point of more than 25°C, wherein the blend of non-digestible polyol fatty acid polyesters has a transition time of more than 60 seconds. Here the transition time as well as the slip melting point relate to the total amount of non-digestible polyol fatty acid polyester present in the composition.

The transition time of a blend consisting of one or more polyol fatty acid polyesters can be determined from the adiabatic crystallization curve, which for most fat blends is of a sigmoid form. The adiabatic crystallization curve is obtained by rapidly chilling the blend of polyol fatty acid polyesters to a particular temperature t, below the slip melting point of said blend, followed by measuring, under adiabatic conditions, the temperature of the fat as a function of time. Temperature t is chosen such that the blend has an N value of 20 at said temperature t. The chilling is effected by passing the fat through a micro-Votator ™ rotating at 600 rpm. The fat should be cooled from its slip melting point to the measuring temperature in about 10 seconds. The time at which, during adiabatic crystallization, the sharpest increase in temperature is observed is called the transition time. Preferably the blend of polyol fatty acid polyesters in the present composition has a transition time of more than 90 seconds, more preferably of more than 120 seconds. Most preferably the blend of polyol fatty acid polyesters has a transition time of more than 3 minutes.

According to a very preferred embodiment of the present invention the transition time is obtained by cooling the polyol fatty acid polyester(s) to a temperature at which the N value of the blend is 40. The N-value for a fat or a fat phase composition at a certain temperature t is indicated as $N_t$ and indicates the equilibrium solid fat content of the composition at that temperature t, expressed in % of the weight of that composition. It can conveniently be measured by means of NMR, as described in Fette, Seifen, Anstrichmittel 80 (1978), 180-186.

It should be noticed that in case of polyol fatty acid polyesters having a long transition time (i.e. of more than 3 minutes), it may be difficult to exactly establish the transition time as such compositions do not normally display a sharp increase in temperature. A simple method that can be used to establish whether a polyol fatty acid polyester composition has a transition time of more than 3 minutes is to utilize the cooling and adiabatic resting method described above and to measure the solid fat content and temperature of the composition at the moment said composition has been held under adiabatic conditions for 3 minutes. A sample of said composition is then equilibrated for 48 hours at the temperature measured after 3 minutes of adiabatic crystallization. If the solid fat content found after 48 hours is at least twice as high as the solid fat content found after 3 minutes, the transition time of the blend of polyol fatty acid polyester composition exceeds 3 minutes. The solid fat content of a fat blend can suitably be measured by using the NMR method as described in Journal of American Oil Chemists' Society, 51 (1974), 316, by Van Putte et al.

The slip melting point can conveniently be defined as the temperature at which the amount of solid phase in a melting fat or fatty substance has become so low that an air bubble is forced upwards in an open capillary filled with the fat or fatty substance.

In this specification the term 'polyol' is intended to refer to any aliphatic or aromatic compound which comprises at least four free hydroxyl groups. Such polyols in particular include the group of sugar polyols, which comprises the sugars, i.e. the mono-, di- and polysaccharides, the corresponding sugar alcohols and the derivatives thereof having at least four free hydroxyl groups. Examples of sugar polyols include glucose, mannose, galactose, xylose, fructose, sorbose, tagatose, ribulose, xylulose, maltose, lactose, cellobiose, raffinose, sucrose, erythritol, mannitol, lactitol, sorbitol, xylitol and alpha-methylglucoside. A generally used and preferred sugar polyol is sucrose.

In this specification by 'non-digestible' is meant that at least about 70 % by weight of the material concerned is not digested by the human body.

In this specification, unless otherwise indicated, the term 'fat' refers to edible fatty substances in a general sense, including natural or synthesized fats and oils consisting essentially of triglycerides such as, for example, soybean oil, sunflower oil, palm oil, palm kernel oil, coconut oil, babassu oil, butter oil, fish oil, lard and tallow, which may have been partially or completely hydrogenated, interesterified, fractionated, or modified otherwise, as well as non-toxic fatty materials having properties similar to triglycerides, which materials may be indigestible, such as for example waxes, e.g. jojoba oil and hydrogenated jojoba oil, and polyol fatty acid polyesters referred to hereinafter in more detail. The terms fat and oil are used interchangeably.

Polyol fatty acid polyesters have been defined in general chemical terms hereinbefore. Preferably, polyol fatty acid polyesters derived from sugars or sugar alcohols are applied, and in particular, sugar fatty acid polyesters derived from disaccharides, such as sucrose.

In general fatty acids per se or naturally occurring fats and oils may be used as source for the fatty acid residues in the polyol fatty acid polyesters. If necessary, conventional techniques may be used to provide the desired slip melting points. Suitably such techniques include full or partial hydrogenation, interesterification, transesterification and fractionation, and may be used before or after conversion of the polyols to polyol fatty acid polyesters. Suitable sources of the fatty acid residues are vegetable oils and fats, such as in particular partially or fully hydrogenated lauric fats, e.g. palm kernel oil, coconut oil, babassu oil.

In accordance with the present invention, polyol fatty acid polyesters are applied of which, on average, more than 70 % of the polyol hydroxyl groups have been esterified with fatty acids. Preferably polyol fatty acid polyesters are used with higher degrees of conversion, in particular polyol fatty acid polyesters of which, on average, more than 85 % or even over 95 % of the polyol hydroxyl groups have been esterified with fatty acids.

The degree to which polyol fatty acid polyesters can be supercooled was found to depend heavily on the distribution of carbon chain length of the fatty acid residues in said polyesters. In case the variance in carbon chain length of the fatty acid residues of the blend of polyol fatty acid polyesters is relatively high, such polyesters can substantially be supercooled. Accordingly in a preferred embodiment of the present invention the statistical variance in carbon chain length of the fatty acid residues of the blend of non-digestible polyol fatty acid polyesters is more than 4.3. More preferably the statistical variance in chain length of the fatty acid residues is more than 5.0. Most preferably the statistical variance is in the range of 5.5 to 15.0 as such compositions display a particularly slow crystallization behaviour.

The variance in carbon chain length of the fatty acid residues in a blend of one or more polyol fatty acid polyesters is calculated by means of the following formula:

$$\text{Variance} = \sum_{i=4}^{23} (X_i - u_x)^2 \times f_i$$

wherein:

$X_i$ is a particular fatty acid residue chain length

$u_x$ is the weight averaged mean chain length of the fatty acid residues in the blend of polyol fatty acid polyesters

$f_i$ is the weight ratio of fatty acid residues having a chain length $X_i$ and fatty acid residues having a chain length in the range of 4 to 23.

Preferably at least 80 wt.%, more preferably essentially all the indigestible polyol fatty acid polyesters in the present composition were obtained by esterifying a polyol with a blend of fatty acids having a statistical variance in chain length of more than 5.0, more preferably in the range of 5.5 to 15.0. Polyol fatty acid polyesters so obtained will exhibit a relatively high intra-polyol-variance in chain length.

Compositions containing polyol fatty acid polyesters having a high intra-polyol-variance are preferred over compositions containing polyesters having the same overall variance in chain length but having a low intra-polyol-variance. The latter compositions are normally obtained by admixture of polyol fatty acid polyesters, having clearly different fatty acid residue distributions.

In another preferred embodiment of the invention the fatty acid residues of the non-digestible polyol fatty acid polyesters contain less than 25 wt.% fatty acid residues of a chain length of 10 or less. We have furthermore found it beneficial to include a significant amount of fatty acid residues having a carbon chain length of 13-17, such as palmitic acid, and to select the bulk of fatty acid residues from those having a chain length of 7-23 carbon atoms. Accordingly, in a preferred embodiment, at least 20 wt.% of the fatty acid residues of the non-digestible polyol fatty acid polyesters have a carbon chain length in the range of 13-17 and more than 80 wt.% of said fatty acid residues have a carbon chain length in the range of 7-23.

Preferably at least 40 wt.% of the fatty acid residues in the blend of polyol fatty acid polyesters of the present composition have been derived from a lauric fat, such as palm kernel oil, coconut oil, babassu oil or fractions thereof. Fatty acids derived from such lauric fats are rich in lauric and myristic fatty acid residues. Accordingly in the present composition preferably at least 5 wt.% of the fatty acid residues in the non-digestible polyol fatty acid polyesters have a carbon chain length of 14 (myristic acid residues) and at least 5 wt.% of the fatty acid residues in the non-digestible polyol fatty acid polyesters have a carbon chain length of 12 (lauric acid residues).

The fatty acid residues in the blend of polyol fatty acid polyesters are preferably obtained from lauric fats and a glyceride fat containing relatively high levels of saturated palmitic and/or stearic acid residues. Accordingly, preferably, at least 80 wt.%, more preferably at least 90 wt.% of the fatty acid residues in the non-digestible polyol fatty acid polyesters have a carbon chain length in the range of 12-18.

According to yet another preferred embodiment less than 10 wt.%, more preferably less than 5 wt.% of fatty acid residues in the non-digestible polyol fatty acid polyesters of the present composition have a carbon chain length of 20 or more.

Suitable triglyceride oils and fats which may be incorporated in the present edible composition include coconut oil, palm kernel oil, palm oil, butter fat, soybean oil, safflower oil, cotton seed oil, rape seed oil, poppy seed oil, corn oil sunflower oil and mixtures thereof. The latter oils can suitably be modified by hydrogenation, fractionation and/or interesterification to provide the required melting characteristics. In particular palm oil, partially hydrogenated rape seed oil and partially hydrogenated soybean oil are preferred.

Triglyceride oil can suitably be included in the present composition as the balance of the fat present therein, in an amount of up to 85 wt.%, preferably in an amount of less than 75 wt.% of the total fat. Most preferably the present composition contains less than 50% triglycerides by weight of the total fat and at least 50% polyol fatty acid polyesters by weight of the total fat.

The edible composition according to the present invention may comprise in addition to the polyol fatty acid polyesters and optionally the triglyceride fats minor ingredients conventionally found in frying oils including antifoams, such as silicon oils, anti-spattering agents, anti-oxidants, such as naturally present or added tocopherols, butylated hydroxytoluene, -anisole or -quinone, acids such as citric acid, ascorbic acid, flavouring agents, and the like. The fat in the present composition, preferably, essentially consists of one or more polyol fatty acid polyesters and triglyceride fat.

Preferably the blend of polyol fatty acid polyesters in the present composition have a slip melting point of more than 30°C, more preferably of more than 37°C. According to another preferred embodiment the slip melting point of the polyol fatty acid polyesters is less than 45°C.

Since the benefits of the present invention are particularly appreciated when the polyol fatty acid polyesters contain limited amounts of unsaturated fatty acid residues, in a preferred embodiment at least 50 wt.%, preferably at least 65 wt.% of the fatty acid residues of the polyol fatty acid polyesters are saturated fatty acid residues.

The composition according to the present invention preferably contains more than 10 wt.%, more preferably even more than 50 wt.% fat. Examples of compositions according to the invention are: frying fats, cooking oils, shortenings, kitchen margarines, spreads, ice cream, dressings, chocolate etc. Most preferably the present composition can suitably be used for shallow and deep frying and accordingly comprises at least 75 wt.% fat.

In a very preferred embodiment of the present invention the fat present therein essentially consists of one or more polyol fatty acid polyesters. In an even more preferred embodiment the composition essentially consists of one or more non-digestible polyol fatty acid polyesters.

Another aspect of the present invention is the use of the present composition in a process for heat treating food products wherein said process involves contacting at least part of such food product with a fluid fat comprising said composition and having a temperature of more than 120°C. When using the present composition in, for instance, deep frying or shallow frying food products, the products will not rapidly develop a solid fat layer after having been taken out of the hot oil.

Yet another aspect of the present invention is a process for preparing fat containing food products, wherein the process involves supercooling said composition. In, for instance, the preparation of spreads containing substantial amounts of triglycerides, it is common practice to supercool the triglyceride fat in scraped surface heat exchangers and thereafter crystallize the supercooled fat in so called C-units. The present edible composition allows the application of such traditional processing technology to the manufacture of spreads containing substantial amounts of polyol fatty acid polyesters.

The invention is further illustrated by the following examples.

## Example 1

A frying fat-composition was prepared consisting of sucrose fatty acid polyesters which can be characterized as follows:

Sucrose esterified to a degree of over 95% with fatty acids derived from a interesterified blend of palm oil hardened to a slip melting point of 58°C (47 parts) and palm kernel oil hardened to a slip melting point of 39°C (53 parts). The sucrose polyester was found to have a slip melting point of 38°C. The fatty acid residue composition of the sucrose polyester was as follows:

| fatty acid chain length | % by weight of total fatty acids |
|---|---|
| 8 | 1.4 |
| 10 | 2.4 |
| 12 | 37.4 |
| 14 | 13.5 |
| 16 | 23.7 |
| 17 | 2.1 |
| 18 | 19.3 |
| 20 | 0.2 |
| 22 | 0 |

The transition time of the fat, determined by means of the method described hereinbefore, was found to exceed 3 minutes. The fat was further used to fry potato chips in a traditional manner. The fried potatoes so obtained were indistinguishable from fried potatoes obtained with conventional frying fat and did not exhibit premature crystallization of sucrose ester.

## Example 2

The above experiment was repeated, using a sucrose polyester, esterified to a degree of over 95% with fatty acids derived from fish oil hardened to a slip melting point of 37°C. The fatty acid residue composition of the sucrose polyester was as follows:

5

| fatty acid chain length | % by weight of total fatty acids |
|---|---|
| 8 | 0 |
| 10 | 0 |
| 12 | 0.3 |
| 14 | 19.1 |
| 16 | 37.7 |
| 17 | 1.5 |
| 18 | 20.6 |
| 20 | 18.7 |
| 22 | 2.1 |

The transition time of this sucrose polyester composition was found to be exceed 3 minutes.

Example 3

A frying fat composition was prepared, consisting of sucrose fatty acid polyesters esterified to a degree of more than 95 % with a mixture of fatty acids. The sucrose polyester was found to have a slip melting point of 27°C. The sucrose polyester composition obtained after esterification was characterized by the following fatty acid residue distribution:

| fatty acid chain length | % by weight of total fatty acids |
|---|---|
| 8 | 0 |
| 10 | 0.2 |
| 12 | 47.6 |
| 14 | 5.0 |
| 16 | 15.2 |
| 17 | 0 |
| 18 | 32.0 |
| 20 | 0 |
| 22 | 0 |

The transition time of the fat, determined by means of the method described hereinbefore, was found to exceed 3 minutes. The fat was used to fry potato chips. The fried potatoes so obtained did not exhibit premature crystallization of sucrose ester.

Comparative Examples A and B

The above experiment was repeated using a frying fat of the following composition:

Frying Fat A

Sucrose esterified to a degree of over 95% with fatty acids derived from a blend of soybean oil fully hardened to a slip melting point of 65°C (55 parts) and soybean oil touch hardened to a slip melting point of 28°C (45 parts). The sucrose polyester had a slip melting point of 42°C.

The fatty acid residue distribution of the sucrose polyester was as follows:

| fatty acid chain length | % by weight of total fatty acids |
|---|---|
| 8 | 0 |
| 10 | 0 |
| 12 | 0.2 |
| 14 | 0.3 |
| 16 | 48.3 |
| 17 | 0.2 |
| 18 | 50.4 |
| 20 | 0.4 |
| 22 | 0.2 |

Frying Fat B

Sucrose esterified to a degree of over 95% with fatty acids derived from palm oil hardened to a slip melting point of 44°C. The statistical variance of the fatty acid chain length for this sucrose polyester was found to be 1.1.

The transition time of both fat compositions was found to be well below 60 seconds and the sliced potatoes fried in these fat compositions rapidly developed a solid fat layer after they were taken from the frying fat and left on a dish at ambient temperature.

Comparative Examples C, D, E, F, G, H, K, L

The transition time of eight different compositions consisting of sucrose fatty acid polyesters (esterified to a degree of more than 95%) was determined. All sucrose polyesters were obtained by esterification with a mixture of fatty acid residues, i.e. the polyesters do not constitute a blend of two or more polyesters having a significantly different intra-polyol variance in fatty acid residue chain length. The fatty acid residue distribution (in % by weight of total fatty acids) of the sucrose polyester compositions was as follows:

| fatty acid chain length | C | D | E | F | G | H | K | L |
|---|---|---|---|---|---|---|---|---|
| 10 | 0.1 | 0.1 | 0.1 | 0 | 0.2 | 0.1 | 0.3 | 0.1 |
| 12 | 0.1 | 0.1 | 0.1 | 0.4 | 0.1 | 0.1 | 0.1 | 0.2 |
| 14 | 1.0 | 0.2 | 0.2 | 15.0 | 0.8 | 0 | 0.2 | 0.6 |
| 16 | 59.3 | 3.9 | 3.6 | 46.2 | 60.6 | 4.6 | 12.8 | 32.6 |
| 18:0:0 [1] | 18.3 | 34.3 | 48.0 | 8.4 | 13.8 | 47.6 | 46.0 | 33.0 |
| 18:1:1 [2] | 6.0 | 46.6 | 27.8 | 19.2 | 18.9 | 6.8 | 0.1 | 3.5 |
| 18:1:0 [3] | 8.9 | 14.8 | 20.3 | 10.4 | 5.3 | 12.7 | 36.7 | 11.7 |
| 18:2:0 [4] | 6.3 | 0.2 | 0.1 | 0.3 | 0.1 | 27.5 | 3.8 | 18.3 |
| 18:3:0 [5] | 0 | 0 | 0 | 0.1 | 0 | 0.1 | 0.1 | 0 |

[1] stearic acid
[2] elaidic acid
[3] oleic acid
[4] linoleic acid
[5] linolenic acid

The slip melting points (in °C) of the above sucrose polyester compositions are represented below:

| C | D | E | F | G | H | K | L |
|---|---|---|---|---|---|---|---|
| 44 | 31 | 42 | 35 | 44 | 34 | 35 | 36 |

The fact that the above figures do not always add up to 100.0 % can be explained from rounding off effects. The transition time of each of the above eight compositions was found to be less than 60 seconds.

**Claims**

1. Edible composition containing a blend of one or more non-digestible polyol fatty acid polyesters having a slip melting point of more than 25°C, wherein the non-digestible polyol fatty acid polyesters have a transition time of more than 60 seconds.

2. Composition according to claim 1, wherein the transition time is at least 90 seconds, preferably more than 3 minutes.

3. Composition according to claim 1 or 2, wherein the statistical variance in carbon chain length of the fatty acid residues of the non-digestible polyol fatty acid polyesters is more than 4.3, preferably more than 5.0.

4. Composition according to any one of claims 1-3, wherein the fatty acid residues of the non-digestible polyol fatty acid polyesters contain less than 25 wt.% fatty acid residues of a carbon chain length of 10 or less.

5. Composition according to any one of claims 1-4, wherein at least 5 wt.% of the fatty acid residues of the non-digestible polyol fatty acid polyesters have a carbon chain length of 14 and at least 5 wt.% of the fatty acid residues of the non-digestible polyol fatty acid polyesters have carbon chain length of 12.

6. Composition according to any one of claims 1-5, wherein the blend of polyol fatty acid polyesters has a slip melting point of more than 30°C, preferably of more than 37°C.

7. Composition according to any one of claims 1-6, wherein at least 50 wt.%, preferably at least 65 wt.% of the fatty acid residues of the polyol fatty acid polyesters are saturated fatty acid residues.

8. Composition according to any one of claims 1-7, wherein the composition contains more than 10 wt.%, preferably more than 50 wt.% fat.

9. Composition according to claim 8, wherein the fat essentially consists of one or more polyol fatty acid polyesters.

10. Composition according to any one of claims 1-9, wherein the blend of polyol fatty acid polyesters has a slip melting point of less than 45°C.

11. Use of a composition according to any one of claims 1-10 in a process for heat treating food products wherein said process involves contacting at least part of such food product with a fluid fat comprising said composition and having a temperature of more than 120°C.

12. Use of a composition according to any one of claims 1-10 in a process for preparing fat containing food products, wherein the process involves supercooling said composition.

**Patentansprüche**

1. Eßbare Zusammensetzung, die ein Gemisch eines oder mehrerer unverdaulicher Polyolfettsäurepolyester enthält, das einen Steigschmelzpunkt größer als 25°C besitzt, worin die unverdaulichen Polyolfettsäurepolyester eine Übergangszeit von mehr als 60 s haben.

2. Zusammensetzung gemäß Anspruch 1, worin die Ubergangszeit mindestens 90 s, vorzugsweise mehr als 3 min, beträft.

3. Zusammensetzung gemäß Anspruch 1 oder 2, worin die statistische Abweichung innerhalb der Kohlenstoffkettenlänge der Fettsäurereste der unverdaulichen Polyolfettsäurepolyester größer als 4,3, vorzugsweise größer als 5,0, ist.

4. Zusammensetzung gemäß irgendeinem der Ansprüche 1 bis 3, worin die Fettsäurereste der unverdaulichen Polyolfettsäurepolyester weniger als 25 Gew.-% Fettsäurereste einer Kohlenstoffkettenlänge von 10 oder kleiner enthalten.

5. Zusammensetzung gemäß irgendeinem der Ansprüche 1 bis 4, worin mindestens 5 Gew.-% der Fettsäurereste der unverdaulichen Polyolfettsäurepolyester eine Kohlenstoffkettenlänge von 14 und mindestens 5 Gew.-% der Fettsäurereste der unverdaulichen Polyolfettsäurepolyester eine Kohlenstoffkettenlänge von 12 besitzen.

6. Zusammensetzung gemäß irgendeinem der Ansprüche 1 bis 5, worin das Gemisch der Polyolfettsäurepolyester einen Steigschmelzpunkt größer als 30°C, vorzugsweise größer als 37°C, besitzt.

7. Zusammensetzung gemäß irgendeinem der Ansprüche 1 bis 6, worin mindestens 50 Gew.-%, vorzugsweise mindestens 65 Gew.-%, der Fettsäurereste der Polyolfettsäurepolyester gesättigte Fettsäurereste sind.

8. Zusammensetzung gemäß irgendeinem der Ansprüche 1 bis 7, worin die Zusammensetzung mehr als 10 Gew.-%, vorzugsweise mehr als 50 Gew.-%, Fett enthält.

9. Zusammensetzung gemäß Anspruch 8, worin das Fett hauptsächlich aus einem oder mehreren Polyolfettsäurepolyester(n) besteht.

10. Zusammensetzung gemäß irgendeinem der Ansprüche 1 bis 9, worin das Gemisch der Polyolfettsäurepolyester einen Steigschmelzpunkt kleiner als 45°C besitzt.

11. Verwendung einer Zusammensetzung gemäß irgendeinem der Ansprüche 1 bis 10 in einem Verfahren zur Wärmebehandlung von Nahrungsmittelprodukten, worin das Verfahren das Inkontaktbringen mindestens eines Teils eines derartigen Nahrungsmittelproduktes mit einem flüssigen Fett umfaßt, das die Zusammensetzung enthält und eine Temperatur größer als 120°C hat.

12. Verwendung einer Zusammensetzung gemäß irgendeinem der Ansprüche 1 bis 10 in einem Verfahren zur Herstellung von Fett, enthaltend Nahrungsmittelprodukte, worin das Verfahren Unterkühlen der Zusammensetzung umfaßt.

## Revendications

1. Composition comestible contenant un mélange d'un ou plusieurs polyesters d'acide gras et de polyol indigestes ayant un point de fusion d'équilibre supérieur à 25°C, dans laquelle les polyesters d'acide gras et de polyol digestes ont un temps de transition supérieur à 60 secondes.

2. La composition selon la revendication 1, dans laquelle le temps de transition est d'au moins 90 secondes, de préférence supérieur à 3 minutes.

3. La composition selon la revendication 1 ou 2, dans laquelle la variance statistique de la longueur de chaîne carbone des résidus d'acide gras des polyesters d'acide gras et de polyol indigestes est supérieure à 4,3, de préférence supérieure à 5,0.

4. La composition selon l'une des revendications 1 à 3, dans laquelle des résidus d'acide gras des polyesters d'acide gras et de polyol indigestes contiennent moins de 25% en masse de résidus d'acide gras d'une longueur de chaîne carbone de 10 ou inférieure.

5. La composition selon l'une des revendications 1 à 4, dans laquelle au moins 5% en masse des résidus d'acide gras des polyesters d'acide gras et de polyol indigestes ont une longueur de chaîne carbone de 14 et au 5% en masse des résidus d'acide gras des polyesters d'acide gras et de polyol indigestes ont une longueur de chaîne carbone de 12.

6. La composition selon l'une des revendications 1 à 5, dans laquelle le mélange de polyesters d'acide gras et de polyol a un point de fusion d'équilibre supérieur à 30°C, de préférence supérieur à 37°C.

7. La composition selon l'une des revendications 1 à 6, dans laquelle au moins 50% en masse, de préférence au moins 65% en masse des résidus d'acide gras des polyesters d'acide gras et de polyol sont des résidus d'acide gras saturé.

8. La composition selon l'une des revendications 1 à 7, dans laquelle la composition contient plus de 10% en masse, de préférence plus de 50% en masse de matière grasse.

9. La composition selon la revendication 8, dans laquelle la matière grasse est essentiellement composée d'un ou plusieurs polyesters d'acide gras et de polyol.

10. La composition selon l'une des revendications 1 à 9, dans laquelle le mélange de polyesters d'acide gras et de polyol a un point de fusion d'équilibre inférieur à 45°C.

11. L'utilisation d'une composition selon l'une des revendications 1 à 10 dans un procédé pour le traitement thermique de produits alimentaires, dans laquelle ledit procédé comprend la mise en contact d'au moins une partie d'un tel produit alimentaire avec une matière grasse liquide composant ladite composition et ayant une température supérieure à 120°C.

12. L'utilisation d'une composition selon l'une des revendications 1 à 10 dans un procédé pour la préparation de produits alimentaires contenant de la matière grasse, dans laquelle le procédé comprend la surfusion de ladite composition.